(19) Europäisches Patentamt
European Patent Office
Office européen des brevets

(11) **EP 2 666 234 B1**

(12) **EUROPÄISCHE PATENTSCHRIFT**

(45) Veröffentlichungstag und Bekanntmachung des Hinweises auf die Patenterteilung:
**10.06.2020   Patentblatt 2020/24**

(21) Anmeldenummer: **11793763.1**

(22) Anmeldetag: **06.12.2011**

(51) Int Cl.:
*H02K 35/02* *(2006.01)*        *H02K 7/18* *(2006.01)*

(86) Internationale Anmeldenummer:
**PCT/EP2011/071825**

(87) Internationale Veröffentlichungsnummer:
**WO 2012/097911 (26.07.2012 Gazette 2012/30)**

(54) **INDUKTIONSGENERATOR UND VERFAHREN ZUM HERSTELLEN EINES INDUKTIONSGENERATORS**

INDUCTION GENERATOR AND METHOD FOR PRODUCING AN INDUCTION GENERATOR

GÉNÉRATEUR À INDUCTION ET PROCÉDÉ DE FABRICATION D'UN GÉNÉRATEUR À INDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.01.2011   DE 102011002740**

(43) Veröffentlichungstag der Anmeldung:
**27.11.2013   Patentblatt 2013/48**

(73) Patentinhaber: **ZF Friedrichshafen AG
88046 Friedrichshafen (DE)**

(72) Erfinder: **RUFF, Eduard
91275 Auerbach (DE)**

(74) Vertreter: **ZF Friedrichshafen AG
Gewerblicher Rechtsschutz
Löwentalerstraße 20
88046 Friedrichshafen (DE)**

(56) Entgegenhaltungen:
**EP-A2- 0 130 423      WO-A1-2004/093299
DE-A1- 10 301 192**

Printed by Jouve, 75001 PARIS (FR)

## Beschreibung

Die vorliegende Erfindung bezieht sich auf einen Induktionsgenerator und einen Funkschalter. Offenbart sind ausserdem ein Verfahren zum Herstellen eines Induktionsgenerators und ein Verfahren zur Erzeugung einer elektrischen Spannung mittels eines Induktionsgenerators, der beispielsweise im Zusammenhang mit einem Funkschalter eingesetzt werden kann.

Die DE 101 25 059 A1 beschreibt einen induktiven Spannungsgenerator, der einen mechanischen Energiespeicher aufweist. Der Energiespeicher speichert Betätigungsenergie bis ein Umschlagpunkt erreicht ist, bei Erreichen dessen sich ein Permanentmagnet des Induktionssystems schlagartig bewegt. Infolge der Bewegung ändert sich der magnetische Fluss schlagartig, wobei der Permanentmagnet am Anfang oder am Ende der Bewegung auf den Kern aufschlägt.

Die Druckschriften DE 103 01 192 A1 und EP 0 130 423 A2 offenbaren jeweils einen Induktionsgenerator mit den oberbegrifflichen Merkmalen des Patentanspruchs 1.

Ein weiterer Induktionsgenerator ist aus dem Dokument WO 2004/093299 A1 bekannt. Der offenbarte Induktionsgenerator weist einen Magnetkern mit U-förmigen Polkontaktabschnitten auf, wobei diese Polkontaktabschnitte wechselweise mit einem dazwischenliegenden kippbeweglichen Spulenkern kontaktierbar sind.

Ein induktiver Spannungsgenerator kann im Zusammenhang mit einem Funkschalter eingesetzt werden. Aktuell ist jedoch sehr viel mechanische Energie erforderlich, um genug elektrische Energie zum Betrieb des Funkschalters erzeugen zu können.

Vor diesem Hintergrund schafft die vorliegende Erfindung einen verbesserten Induktionsgenerator und einen verbesserten Funkschalter. Offenbart sind ausserdem ein verbessertes Verfahren zur Erzeugung einer elektrischen Spannung mittels eines Induktionsgenerators und ein verbessertes Verfahren zum Herstellen eines Induktionsgenerators gemäß den Hauptansprüchen. Vorteilhafte Ausgestaltungen ergeben sich aus den Unteransprüchen und der nachfolgenden Beschreibung.

Der erfindungsgemäße Ansatz basiert auf einem E-förmigen Magnetkern, wobei ein mittlerer Arm des Magnetkerns als Träger für eine Spule dient. Wird ein Magnet ausgehend von einer ersten Position, in der der Magnet einen ersten Magnetkreis über einen ersten der äußeren Arme und dem mittleren Arm des Magnetkerns schließt, in eine zweite Position bewegt, in der der Magnet einen zweiten Magnetkreis über einen zweiten der äußeren Arme und den mittleren Arm des Magnetkerns schließt, so ändert sich die Richtung des magnetischen Fluss durch den mittleren Arm des Magnetkerns. Dadurch wird eine elektrische Spannung zwischen elektrischen Anschlüssen der Spule erzeugt. Die elektrische Spannung kann zum Betrieb einer elektrischen Einrichtung, beispielsweise einer Funkschnittstelle eines Funkschalters, eingesetzt werden. Der Magnet kann wiederum durch eine Betätigung eines Schalters, beispielsweise des Funkschalters, bewegt werden.

Bei einem auf diesem Prinzip basierenden Generator ist nur wenig mechanische Energie nötig, um genügen elektrische Energie zum Betrieb einer einfachen elektrischen Schaltung erzeugen zu können. Dadurch weist der Generator eine hohe Effizienz auf. Zudem kann bei dem Generator die Magnetflussdichte im mechanischen Trennungsbereich zwischen dem Spulenkern und dem Magneten optimiert werden. Dadurch kann die Verteilung der Magnetflussdichte in den Magnetkreisen verbessert werden. Zusätzlich ermöglicht der Aufbau des Generators eine Reduzierung der Herstellungskosten.

Die vorliegende Erfindung schafft einen Induktionsgenerator für einen Funkschalter, mit den Merkmalen des Patentanspruchs 1.

Ein Funkschalter kann beispielsweise für einen Autoschlüssel oder einen Lichtschalter eingesetzt werden. Der Induktionsgenerator kann ausgebildet sein, um durch eine Betätigung des Funkschalters genügend elektrische Energie zum Übertragen einer Information über die Betätigung des Funkschalters über eine Funkschnittstelle bereitzustellen. Das Anwendungsgebiet eines Funkschalters ist dabei beispielhaft gewählt. Generell kann der Induktionsgenerator überall dort eingesetzt werden, wo eine Umwandlung von mechanischer Energie in elektrische Energie erforderlich oder zweckmäßig ist. Der Magnetumleiter und der Spulenkern können aus einem Material mit einer hohen magnetischen Leitfähigkeit, insbesondere aus einem ferromagnetischen Material hergestellt sein. Der Magnetumleiter kann einstückig ausgebildet sein, beispielsweise als eine U-förmig gebogene Platte. Ist der Magnetumleiter aus einzelnen Elementen zusammengesetzt, so können die einzelnen Elemente so verbunden sein, dass ein magnetischer Fluss durch den Magnetumleiter nicht unterbrochen wird, also beispielsweise direkt aneinandergrenzen. Eine Längserstreckungsrichtung des ersten Schenkels kann einer Längserstreckungsrichtung des zweiten Schenkels des Magnetumleiters entsprechen. Somit können die Schenkel parallel zueinander angeordnet sein. Der Magnetumleiter und der Spulenkern können in einer Ebene angeordnet sein. Der Spulenkern kann starr mit dem Magnetumleiter verbunden sein. Die Verbindung zwischen dem Spulenkern und dem Magnetumleiter kann eine hohe magnetische Leitfähigkeit aufweisen. Die Induktionsspule kann eine Mehrzahl von Drahtwicklungen aufweisen, die um den Spulenkern herumgeführt sind. Die Wicklungen können einen Raum zwischen dem Spulenkern und den Schenkeln des Magnetumleiters ausfüllen. Die Induktionsspule kann elektrische Anschlüsse aufweisen, über die eine durch die Induktionsspule erzeugte Spannung abgegriffen werden kann. Die Anschlüsse können eine elektrische Schnittstelle des Induktionsgenerators bilden. Das Magnetelement kann ein Dauermagnet sein oder einen Dauermagneten umfassen. Anstelle eines Dauermagneten kann eine anderer zum Erzeugen des erforderlichen Magnetfelds geeignetes Element eingesetzt werden. Die Kontaktbereiche des Magnetelements können an gegenüberliegenden Rändern des Magnetelements angeordnete Überstände umfassen. Die Kontaktbereiche können Flächen des Magnetelements sein oder durch Polschuhe gebildet sein, die an den Polen des Dauermagneten angeordnet sind. Die Polschuhe können aus einem ferromagnetischen Stoff sein. Der erste Kontaktbereich kann einen magnetischen Südpol und der zweite Kontaktbereich einen magnetischen Nordpol ausbilden. Das Magnetelement kann mittels einer geeigneten Führungseinrichtung zwischen der ersten Position und der zweiten Position bewegt werden. Die Bewegung des Magnetelements kann linear verlaufen. Der Spulenkern und die Schenkel des Magnetumleiters können jeweils Anschlagflächen für die Kontaktbereiche des Magnetelements aufweisen. Das Magnetelement kann eine mechanische Schnittstelle des Induktionsgenerators zu einer Betätigungseinrichtung aufweisen. Bei der Betätigungseinrichtung kann es sich zum Beispiel um einen Schalter handeln. In der ersten Position des Magnetelements können der erste Kontaktbereich des Magnetelements mit dem ersten Schenkel und der zweite Kontaktbereich mit dem Spulenkern verbunden sein. Verbunden kann bedeuten, dass die Kontaktbereiche des Magnetelements den entsprechenden Schenkel und den Magnetkern direkt berühren oder einen sehr geringen Abstand dazu aufweisen, so dass ein magnetischer Widerstand zwischen den Kontaktbereichen und dem entsprechenden Schenkel und dem Magnetkern minimiert wird. Befindet sich das Magnetelement in der ersten Position, so wird ein erster Magnetkreis mit geringem magnetischen Widerstand geschlossen, der durch den ersten Kontaktbereich, den ersten Schenkel und einen Teil des Verbindungsbereichs des Magnetumleiters, den Spulenkern und den zweiten Kontaktbereich verläuft. In der zweiten Position können der zweite Kontaktbereich mit dem zweiten Schenkel und der erste Kontaktbereich mit dem Spulenkern verbunden sein. Befindet sich das Magnetelement in der zweiten Position, so wird ein zweiter Magnetkreis mit geringem magnetischen Widerstand geschlossen, der durch den ersten Kontaktbereich, den Spulenkern, einen Teil des Verbindungsbereichs und den ersten Schenkel des Magnetumleiters und durch den zweiten Kontaktbereich verläuft. Korrespondierende Kontaktflächen zwischen den Kontaktbereichen und den Schenkeln sowie dem Spulenkern können von der Formgebung her aneinander angepasst sein. Beispielsweise können die Kontaktflächen jeweils plan ausgeführt sein. Vorteilhafterweise wechselt eine magnetische Richtung des Magnetflusses bei einem Wechsel des Magnetelements von der ersten Position in die zweite Position nur in dem Spulenkern und nicht in dem Magnetumleiter.

Das Magnetelement weist einen ersten Polschuh zum Ausbilden des ersten Kontaktbereichs und einen zweiten Polschuh zum Ausbilden des zweiten Kontaktbereichs auf. Dabei überlappen freie Enden des ersten und des zweiten Polschuhs, jeweils mit freien Enden des Spulenkerns und des ersten und zweiten Schenkels. Die freien Enden des Spulenkerns und der Schenkel können dem Verbindungsbereich gegenüberliegende Enden des Spulenkerns und der Schenkel sein. Die freien Enden der Polschuhe können über einen Dauermagneten des Magnetelements hinausragen. Der erste Polschuh kann somit in einen Zwischenraum zwischen dem ersten Schenkel und dem Spulenkern hineinragen und der zweite Polschuh kann in einen Zwischenraum zwischen dem zweiten Schenkel und dem Spulenkern hineinragen. Längserstreckungsrichtungen der freien Enden der Polschuhe können Längserstreckungsrichtungen der freien Enden der Schenkel und des Spulenkerns entsprechen. Durch die Überlappung können die Kontaktflächen zwischen dem Magnetelement und den Schenkeln bzw. dem Spulenkern sehr großflächig ausgeführt werden. Dadurch kann die Magnetflussdichte an den Kontaktflächen so optimiert werden, dass sowohl ein guter magnetischer Fluss über die Kontaktflächen erfolgt als auch ein einfaches Trennen der Kontaktflächen bei einer Bewegung des Magnetelements möglich ist.

Eine Verbindungslinie zwischen einem Südpol und einem Nordpol des Magnetelements kann quer zu einer Längserstreckungsrichtung des Spulenkerns verlaufen. Somit sind beispielsweise der Südpol auf der dem ersten Schenkel zugewandten Seite und der Nordpol auf der dem zweiten Schenkel zugewandten Seite angeordnet. Auf diese Weise können die Polschuhe sehr einfach, insbesondere geradlinig, ausgeführt sein. Auch können beide Polschuhe identisch oder zumindest in ihrer wesentlichen geometrischen Form identisch ausgeformt sein. Dadurch können zum einen Gewicht und zum anderen Kosten eingespart werden.

Der Spulenkern weist einen Trägerabschnitt zum Tragen der Induktionsspule und einen Kontaktabschnitt zum Kontaktieren des ersten und des zweiten Kontaktbereichs auf. Dabei ist ein Querschnitt durch den Kontaktabschnitt größer als ein Querschnitt durch den Trägerabschnitt. Der Kontaktabschnitt kann zwei gegenüberliegende Kontaktflächen aufweisen. Entlang des Trägerabschnitts können die Wicklungen der Induktionsspule angeordnet sein. Durch den geringen Querschnitt in dem Trägerabschnitt kann ein Durchmesser der Induktionsspule gering gehalten werden. Durch den großen Querschnitt in dem Kontaktabschnitt kann dagegen die Flussdichte an der Schnittstelle zu den Kontaktbereichen des Magnetelements gering gehalten werden. Dies erleichtert wiederum dass Trennen der Kontaktbereiche des Magnetelements von dem Spulenkern.

Entsprechend dazu können der erste und der zweite Schenkel jeweils einen Abschnitt zum Überspannen der Induktionsspule und einen Kontaktabschnitt zum Kontaktieren des ersten und des zweiten Kontaktbereichs aufweisen. Dabei kann ein Querschnitt durch die Abschnitte zum Überspannen jeweils größer als ein Querschnitt durch die Kontaktabschnitte sein. Die Abschnitte zum Überspannen können die gesamte Länge der Induktionsspule überspannen.

Indem der Querschnitt der Abschnitte zum Überspannen größer als der Querschnitt der Kontaktabschnitte ist, können die Abschnitte zum Überspannen eine Breite aufweisen, die einer Breite der Induktionsspule entspricht. Die Kontaktabschnitte können dagegen an eine geringere Breite der Kontaktbereiche des Magnetelements angepasst sein.

Gemäß einer Ausführungsform kann der Verbindungsbereich eine Öffnung zur Aufnahme eines Endabschnitts des Spulenkerns aufweisen. Auf diese Weise kann der Spulenkern durch Einstecken des Endabschnitts in die Öffnung mit dem Magnetumleiter verbunden werden.

Ferner weist der Induktionsgenerator eine Betätigungseinrichtung zum Bewegen des Magnetelements zwischen der ersten Position und der zweiten Position auf. Durch die Betätigungseinrichtung kann das Magnetelement ebenfalls zwischen der zweiten Position und der ersten Position bewegt werden. Durch eine Betätigung der Betätigungseinrichtung kann das Magnetelement von der ersten in die zweite Position und wieder zurück bewegt werden. Dazu kann die Betätigungseinrichtung eine geeignete Mechanik aufweisen. Die Betätigungseinrichtung kann manuell betätigt werden.

Die vorliegende Erfindung schafft ferner einen Funkschalter mit folgenden Merkmalen:

einem Schaltelement;

einem Induktionsgenerator gemäß einer Ausführungsform der vorliegenden Erfindung, wobei das Magnetelement des Induktionsgenerators mit dem Schaltelement gekoppelt ist, um bei einer Betätigung des Schaltelements von der ersten Position in die zweite Position bewegt zu werden; und

einer Übertragungseinrichtung zur drahtlosen Übertragung einer Information über eine Betätigung des Schaltelements, wobei elektrische Anschlüsse der Übertragungseinrichtung mit elektrischen Anschlüssen der Induktionsspule des Induktionsgenerators verbunden sind.

Das Schaltelement kann einen Schalter umfassen, der manuell oder durch eine Auslöseeinrichtung, beispielsweise eines Sensors, betätigt werden kann. Das Schaltelement kann ferner eine geeignete Mechanik umfassen, über die das Schaltelement mit dem Magnetelement gekoppelt ist. Dadurch kann durch einen Schaltvorgang des Schaltelements eine Bewegung des Magnetelements bewirkt werden. Die Übertragungseinrichtung kann eine Antenne umfassen. Ferner kann die Übertragungseinrichtung eine Elektronik zur Auswertung einer durch die Induktionsspule erzeugten Spannung und zur Ansteuerung der Antenne entsprechend der erzeugten Spannung umfassen. Entsprechend können die elektrischen Anschlüsse der Induktionsspule mit Anschlüssen der Antenne oder der Elektronik verbunden sein.

Offenbart ist ferner ein Verfahren zur Erzeugung einer elektrischen Spannung mittels eines Induktionsgenerators gemäß einer Ausführungsform der vorliegenden Erfindung, wobei das Verfahren den folgenden Schritt umfasst: Bewegen des Magnetelements von der ersten Position in die zweite Position.

Offenbart ist ferner ein Verfahren zum Herstellen eines Induktionsgenerators für einen Funkschalter, das die folgenden Schritte umfasst:

Anordnen einer Induktionsspule auf einem Spulenkern;

Bereitstellen eines U-förmigen Magnetumleiters mit einem ersten Schenkel, einem benachbart zu dem ersten Schenkel angeordneten zweiten Schenkel und einem Verbindungsbereich zum Verbinden des ersten und des zweiten Schenkels;

Verbinden des Spulenkerns mit dem Verbindungsbereich des Magnetumleiters, so dass die Induktionsspule zwischen dem ersten und dem zweiten Schenkel des Magnetumleiters angeordnet ist;

Bereitstellen eines Magnetelements mit einem ersten Kontaktbereich und einem zweiten Kontaktbereich; und

Anordnen des Magnetelements benachbart zu dem Spulenkern und den Schenkeln des Magnetumleiters, wobei das Magnetelement zwischen einer ersten Position und einer zweiten Position bewegbar ist und wobei in der ersten Position des Magnetelements der erste Kontaktbereich an den ersten Schenkel und der zweite Kontaktbereich an den Spulenkern und in der zweiten Position des Magnetelements der erste Kontaktbereich an den Spulenkern und der zweite Kontaktbereich an den zweiten Schenkel angrenzen, wobei der Spulenkern einen Trägerabschnitt zum Tragen der Induktionsspule und einen Kontaktabschnitt zum Kontaktieren des ersten und des zweiten Kontaktbereichs des Magnetelements aufweist, wobei ein Querschnitt durch den Kontaktabschnitt größer als ein Querschnitt durch den Trägerabschnitt ist.

Der Spulenkern kann kraft-, form- oder stoffschlüssig mit dem Magnetumleiter verbunden werden. Beispielsweise kann der Spulenkern über eine Steckverbindung mit dem Magnetumleiter verbunden werden. Indem zuerst der Spulenkern mit der Induktionsspule verbunden wird, kann der Induktionsgenerator sehr einfach und kostengünstig aufgebaut werden.

Die Erfindung wird anhand der beigefügten Zeichnungen beispielhaft näher erläutert. Es zeigen:

Figuren 1a und 1b   einen Induktionsgenerator in unterschiedlichen Schaltstellung gemäß einem Ausführungsbeispiel der vorliegenden Erfindung;

Figuren 2a bis 2c   Schnittdarstellungen eines Induktionsgenerators gemäß einem Ausführungsbeispiel der vorliegenden Erfindung;

Fig. 3   einen Induktionsgenerator gemäß einem Ausführungsbeispiel der vorliegenden Erfindung;

Fig. 4   einen Spulenkern für einen Induktionsgenerator gemäß einem Ausführungsbeispiel der vorliegenden Erfindung;

Fig. 5   einen Induktionsgenerator gemäß einem Ausführungsbeispiel der vorliegenden Erfindung;

Fig. 6   einen Induktionsgenerator gemäß einem Ausführungsbeispiel der vorliegenden Erfindung;

Fig. 7   eine schematische Darstellung eines Funkschalters gemäß einem Ausführungsbeispiel der vorliegenden Erfindung; und

Fig. 8   ein Ablaufdiagramm eines Verfahrens zum Herstellen eines Induktionsgenerators gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

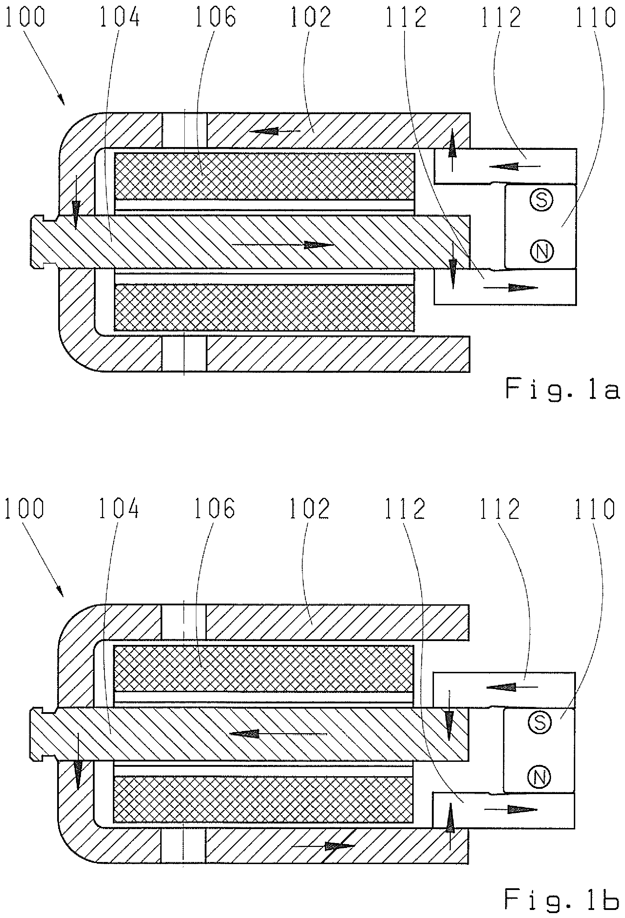

Fig. 1a zeigt eine Schnittdarstellung eines Induktionsgenerators 100 gemäß einem Ausführungsbeispiel der vorliegenden Erfindung. Der Induktionsgenerator 100 weist einen Magnetumleiter 102, einen Spulenkern 104 und eine Spule 106 auf. Ferner weist der Induktionsgenerator 100 ein Magnetelement mit einem Dauermagneten 110 und zwei Polschuhen 112 auf.

Der Magnetumleiter 102 ist U-förmig und weist zwei parallel angeordnete Schenkel und einen Verbindungsbereich zum Verbinden der Schenkel auf. Der Verbindungsbereich ist rechtwinklig zu den Schenkeln angeordnet. Der Verbindungsbereich weist mittig eine Durchgangsöffnung auf. Der Spulenkern 104 ist stabförmig. Ein Endabschnitt des Spulenkerns 104 ist durch die Durchgangsöffnung des Verbindungsbereichs des Magnetumleiters 102 geführt. Der Spulenkern 104 ist parallel zu den Schenkeln des Magnetumleiters 102 angeordnet. Der Spulenkern 104 ist mittig zu den Schenkeln des Magnetumleiters 102 angeordnet. Die Spule 106 weist eine Mehrzahl von Wicklungen auf, die um den Spulenkern 104 gewickelt sind. Die Spule 106 kann einen Raum zwischen dem Spulenkern 104 und den Schenkeln des Magnetumleiters 102 ausfüllen. Dabei kann zwischen der Spule 106 und dem Spulenkern 104 sowie zwischen der Spule 106 und dem Magnetumleiter 102 jeweils eine elektrische Isolationsschicht angeordnet sein. Freie Enden der Schenkel des Magnetumleiters 102 und des Spulenkerns 104 ragen über ein dem Magnetelement zugewandtes Ende der Spule 106 hinaus. Ein Überstand der freien Enden kann jeweils gleich lang sein, so dass die Schenkel und der Spulenkern bündig abschließen. Die freien Enden der Schenkel und des Spulenkerns bilden Kontaktabschnitte für die Polschuhe 112 des Magnetelements.

Der Dauermagnet 110 weist einen magnetischen Nordpol und einen magnetischen Südpol auf. Der Dauermagnet 110 ist in Bezug auf den Magnetumleiter 102 so ausgerichtet, dass ein erster Pol des Dauermagneten 110 auf der Seite eines ersten der Schenkel und ein zweiter Pol des Dauermagneten 110 auf der Seite des anderen der Schenkel angeordnet ist. Somit verlaufen die Magnetfeldlinien innerhalb des Dauermagneten 110 quer zu einer Längserstreckungsrichtung des Spulenkerns 104 oder anders ausgedrückt parallel zu einer gedachten Verbindungslinie zwischen den Schenkeln des Magnetumleiters 102. Der Dauermagnet 110 ist rechteckförmig. Die Polschuhe 112 sind als Platten ausgebildet. Die Polschuhe 112 sind beidseitig des Dauermagneten 110 angeordnet. Insbesondere sind die Polschuhe 112 an den die Pole bildenden Endflächen des Dauermagneten 110 angeordnet. Die Polschuhe 112 weisen jeweils einen Überstand über den Dauermagneten 110 auf. Der Überstand ist auf der, der Spule 106 zugewandten Seite des Dauermagneten 110. Der Dauermagnet 110 ist beabstandet zu einer Endfläche des Spulenkerns 104 angeordnet. Aufgrund des Überstands der Polschuhe 112 ragen die Polschuhe 112 in einen Zwischenraum zwischen dem Spulenkern 104 und den Schenkeln des Magnetumleiters 102 hinein. Dabei ist der Dauermagnet 110 so angeordnet, dass ein erster der Polschuhe 112 in den Zwischenraum zwischen dem Spulenkern 104 und einem ersten der Schenkel des Magnetumleiters 102 und ein zweiter der Polschuhe 112 in den Zwischenraum zwischen dem Spulenkern 104 und einem zweiten der Schenkel des Magnetumleiters 102 hineinragt. Ein Abstand zwischen einer dem ersten Schenkel zugewandten Kontaktfläche des ersten Polschuhs 112 und einer dem Spulenkern 104 zugewandten Kontaktfläche des zweiten Polschuhs 112 entspricht einem Abstand zwischen einer dem ersten Polschuh 112 zugewandten Kontaktfläche des ersten Schenkels und einer dem zweiten Polschuh 112 zugewandten Kontaktfläche des Spulenkerns 104.

Das aus dem Dauermagneten 110 und den Polschuhen 112 bestehende Magnetelement kann eine Relativbewegung in Bezug auf den Spulenkern 104 und den Magnetumleiter 102 ausführen. Dazu kann das Magnetelement beweglich angeordnet sein. Insbesondere kann das Magnetelement eine Linearbewegung parallel zu einer gedachten Verbindungslinie zwischen den Schenkeln des Magnetumleiters 102 ausführen. In einer ersten Position ist das Magnetelement in Richtung des ersten Schenkels ausgelenkt. Dabei ist eine erste Kontaktfläche des ersten Polschuhs 112 in Kontakt mit einer Kontaktfläche des ersten Schenkels und eine erste Kontaktfläche des zweiten Polschuhs 112 ist in Kontakt mit einer ersten Kontaktfläche des Spulenkerns 104. In einer zweiten Position ist das Magnetelement in Richtung des zweiten Schenkels ausgelenkt. Dabei ist eine zweite Kontaktfläche des ersten Polschuhs 112 in Kontakt mit einer zweiten Kontaktfläche des Spulenkerns 104 und eine zweite Kontaktfläche des zweiten Polschuhs 112 ist in Kontakt mit einer Kontaktfläche des zweiten Schenkels. Die erste und die zweite Kontaktfläche der Polschuhe 112 sind einander jeweils gegenüberliegend angeordnet. Ebenfalls sind die erste und die zweite Kontaktfläche des Spulenkerns Polschuhe 112 einander gegenüberliegend angeordnet. Wie durch die Pfeile angedeutet ist in der ersten Position ein magnetischer Fluss durch den ersten Polschuh 112 in den ersten Schenkel des Magnetumleiters 102 hinein, aus dem Verbindungsbereich des Magnetumleiters 102 in den Spulenkern 104 hinein und aus dem Spulenkern 104 in den zweiten Polschuh 112 hinein möglich.

Fig. 1b zeigt eine Schnittdarstellung des in Fig. 1a gezeigten Induktionsgenerators 100 in der zweiten Position gemäß einem Ausführungsbeispiel der vorliegenden Erfindung. Wie durch die Pfeile angedeutet ist in der zweiten Position ein magnetischer Fluss durch den ersten Polschuh 112 in den Spulenkern 104 hinein, aus dem Spulenkern 104 in den Verbindungsbereich des Magnetumleiters 102 hinein und aus dem zweiten Schenkel des Magnetumleiters 102 in den zweiten Polschuh 112 hinein möglich.

Befindet sich das Magnetelement in der ersten Position, so ist eine magnetische Flussrichtung in dem Spulenkern 104 entgegengesetzt zu einer magnetischen Flussrichtung in dem Spulenkern 104, wenn sich das Magnetelement in der zweiten Position befindet. Wechselt das Magnetelement von der ersten Position in die zweite Position oder umgekehrt, so kehrt sich die Flussrichtung in dem Spulenkern 104 um und es wird eine Spannung in die Spule 106 induziert. Auf diese Weise kann mechanische Energie, die zu einer Bewegung des Magnetelements führt in elektrische Energie gewandelt werden.

Durch den in den Figuren 1a und 1b gezeigten Aufbau wird die Effizienz des Generators verbessert, indem der Magnetfluss im Kern 104 möglichst hoch ist. Ebenso ist die Flussdichte im Spulenbereich möglichst hoch, um die Dimension der Spule 106 gering zu halten. Zudem sind die Verluste im restlichen Magnetkreis möglichst gering. Wie aus den Figuren 1a und 1b ersichtlich, ist der Magnetkern nicht U-förmig aufgebaut, sondern E-förmig und besteht aus dem Spulenkern 104 und dem Magnetumleiter 102.

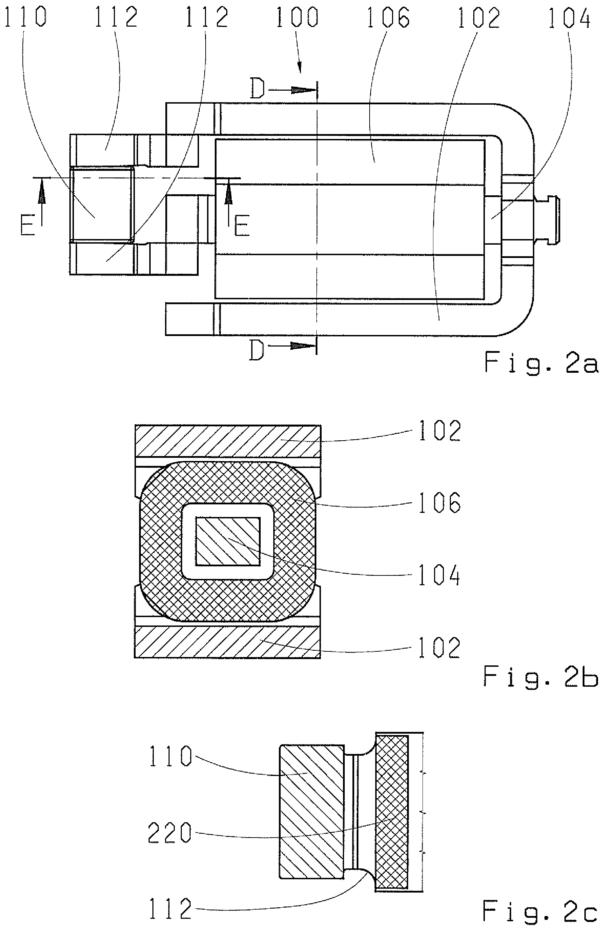

Die Figuren 2a bis 2c zeigen Schnittdarstellungen eines Induktionsgenerators 100 gemäß einem Ausführungsbeispiel der vorliegenden Erfindung. Der Aufbau des Induktionsgenerators 100 kann dem Aufbau des in den Figuren 1a und 1b gezeigten Induktionsgenerators 100 entsprechen.

Aus Fig. 2a ist ersichtlich, dass ein Endabschnitt des Spulenkerns 104 durch den Verbindungsbereich des Magnetumleiters 102 hindurchgeführt ist und auf einer der Spule 106 gegenüberliegenden Seite des Magnetumleiters 102 einen Überstand mit einer Nut aufweist.

Fig. 2b zeigt eine Schnittdarstellung des in Fig. 2a gezeigten Induktionsgenerators 100 entlang der Schnittlinie D-D. Die Schnittlinie verläuft durch die Schenkel des Magnetumleiters 102, die Spule 106 und den Spulenkern 104. Der Spulenkern weist einen rechteckigen Querschnitt auf. Die Schenkel des Magnetumleiters 102 weisen eine Breite auf, die einer Breite der Spule 106 entspricht oder geringfügig größer ist. Eine Dicke der Schenkel des Magnetumleiters 102 ist geringer als eine Breite der Schenkel. Auch ist eine Dicke der Schenkel geringer als eine Dicke des Spulenkerns 104.

Fig. 2c zeigt eine Schnittdarstellung des in Fig. 2a gezeigten Induktionsgenerators 100 entlang der Schnittlinie E-E. Die Schnittlinie verläuft durch den Dauermagneten 110. Gezeigt ist ein über den Dauermagneten 110 überstehender Bereich des Polschuhs 112 und eine angedeutete Schnittstelle 220 zwischen dem Magnetumleiter und dem Polschuh 112. Im Bereich der Schnittstelle 220 weist der Polschuh 112 eine Breite auf, die der Breite des Magnetumleiters im Bereich der Schnittstelle 220 entspricht oder geringfügig kleiner ist. Zwischen dem Dauermagneten 110 und der Schnittstelle 220 weist der Polschuh 112 eine Verjüngung in Bezug auf die Breite auf.

Um die Haltekraft zwischen den Polschuhen 112 und dem Magnetumleiter 102 sowie dem Spulenkern 104 zu reduzieren, soll die Flussdichte an den Schnittstellen 220 möglichst gering sein. Dies wird erreicht, in dem die Schnittstelle 220 zwischen Magnetumleiter 102 bzw. Spulenkern 104 und Polschuhen 112 vergrößert wird. Bei weniger Haltekraft wird auch weniger mechanische Kraft zum Aktivierung des Generators benötigt.

Dabei wird der gesamte magnetische Fluss im Magnetkreis zumindest nicht verringert.

$$F = B^2 \times A/2\mu_0$$

B = Flussdichte
A = Fläche der Schnittstelle
$\mu_0$ = Magnetische Feldkonstante

Um die Schnittfläche zwischen den Polschuhen 112 und dem Magnetumleiter 102 bzw. dem Spulenkern 104 zu vergrößern, wird der Querschnitt des Magnetumleiters 102 bzw. der Querschnitt des Spulenkerns 104 im Schnittstellenbereich 220 entsprechend angepasst, wie es in Fig. 2c gezeigt ist. Gleichzeitig dient die Vergrößerung der Querschnittfläche des Magnetumleiters 102 der Reduzierung der Verluste im gesamten Magnetkreis.

Der Spulenkern 104 wird wie bereits erwähnt, nur im Schnittstellenbereich 220 vom Querschnitt her vergrößert, um an dieser Stelle die Flussdichte zu reduzieren. Über die Länge des Spulenkerns 104 wird der Querschnitt so gering wie möglich ausgeführt, beispielsweise gerade so groß, das noch keine magnetische Sättigung erfolgt. Dadurch kann die Spule 106 möglichst kompakt gestaltet und die Einzelwindungslängen und somit der elektrische Widerstand von Einzelwindungen möglichst gering gehalten werden. Neben dem Minimieren des Querschnitts über die Länge des Spulenkerns 104 wird ein möglichst quadratischer Querschnitt angestrebt. Je quadratischer der Spulenkern 104 und die darüber gewickelte Spule 106 sind, desto niedriger ist der Spulenwiederstand und entsprechend die Verluste in der Spule 106. Eine entsprechende Ausformung ist in Fig. 2b gezeigt.

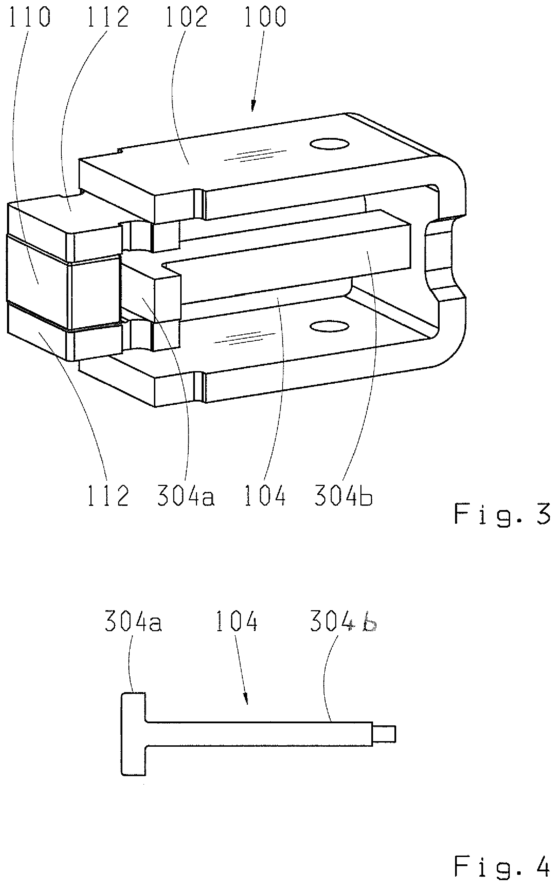

Fig. 3 zeigt eine Darstellung des Induktionsgenerators 100 gemäß einem Ausführungsbeispiel der vorliegenden Erfindung, wobei die Spule des Induktionsgenerators 100 nicht gezeigt ist. Der Aufbau des Induktionsgenerators 100 kann ansonsten dem Aufbau des in Fig. 1a gezeigten Induktionsgenerators 100 entsprechen.

Der Magnetumleiter 102 weist über seine gesamte Länge eine gleichmäßige Dicke auf. Im Bereich der Schnittstellen zu den Polschuhen 112 weisen die Schenkel des Magnetumleiters 102 eine geringere Breite auf, als in einem weiteren Bereich der Schenkel bis zu dem Verbindungsbereich. Eine Breite des Verbindungsbereichs entspricht einer Breite der Schenkel, wobei der Verbindungsbereich auf Höhe der Durchgangsöffnung für den Spulenkern 104 eine reduzierte Breite aufweist. Die Schenkel des Magnetumleiters 102 weisen in der Nähe des Verbindungsbereichs zwei runde Durchgangsöffnungen auf.

Der Dauermagnet 110 ist quaderförmig. Die Polschuhe 112 liegen plan auf gegenüberliegenden Oberflächen des Dauermagneten 110 auf. Die Polschuhe 112 bedecken die jeweiligen Oberflächen des Dauermagneten 110 vollständig. Weitere Flächen des Dauermagneten 110 werden von den Polschuhen 112 nicht berührt oder überspannt.

Der Spulenkern 104 weist einen möglichst großen Querschnitt im Schnittflächenbereich 304a zu den Polschuhen 112 auf. Im Spulenbereich 304a weist der Spulenkern 104 einen geringen und annähernd quadratischen Querschnitt auf.

Fig. 4 zeigt einen Spulenkern 104 für einen Induktionsgenerator 100 gemäß einem Ausführungsbeispiel der vorliegenden Erfindung. Bei dem Spulenkern 104 kann es sich um den Spulenkern 104 des in Fig. 3 gezeigten Induktionsgenerators 100 handeln. Der Spulenkern weist in dem Abschnitt 304a eine größere Breite als in dem Abschnitt 304b auf. Beispielsweise kann die Breite des Abschnitts 304a dem zweifachen bis vierfachen der Breite des Abschnitts 304b entsprechen. Eine Dicke des Spulenkerns 104 in den Abschnitten 304a, 304b kann gleich sein. In einem dem Abschnitt 304a gegenüberliegenden Endbereich weist der Spulenkern 104 eine geringere Dicke und Breite als in dem Abschnitt 304b auf.

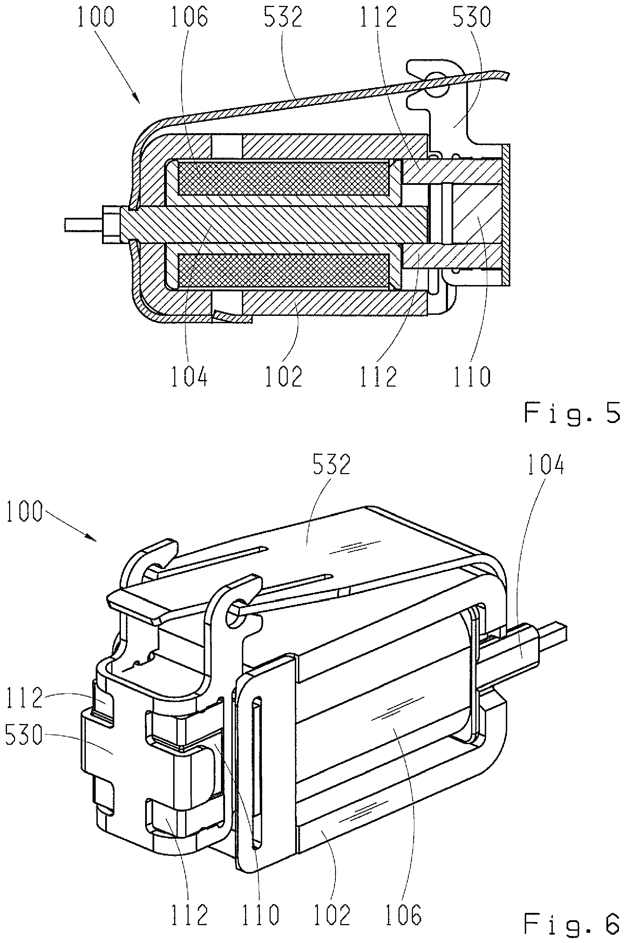

Wie aus den schematischen Darstellungen der Figuren 4 und 5 ersichtlich ist, ist der Querschnitt zwischen Spulenkern 104 und der Schnittfläche oder Trennfläche zu den Polschuhen 112 unterschiedlich, um im Bereich der Schnittflächen die Flussdichte zu reduzieren. Daraus ergibt sich eine T-Form des Spulenkerns 104.

Der Magnet 110 sowie der gesamte Magnetblock sind einfach und kostengünstig in der Herstellung. Dabei wird bei dem Magnetblock ein einfacher Dauermagnet 110 eingesetzt, an dessen Stirnseiten je ein Polschuh 112 angebracht wird. Dabei werden geometrisch einfache und vor allem identische Polschuhe 112 zum Leiten des Magnetflusses verwendet. Durch die Verwendung identischer Polschuhe 112, lassen sich diese in größeren Stückzahlen und somit günstiger beziehen.

Der Dauermagnet 110 und die Polschuhe 112 können entweder umspritzt werden, oder noch günstiger, einfach mit einem Metallkäfig verschnappt werden. Der Magnetblock ist durch die Verwendung der geometrisch einfach gestalteten Polschuhe sehr kostengünstiger. Außerdem kann der Magnetblock sehr klein und leicht gestaltet werden. Dadurch können bessere Beschleunigung bedingt durch eine geringere Massenträgheit erzielt werden.

Im Vergleich zu einem U-förmigen Spulenkern verursacht die Vergrößerung des Magnetumleiters 102 fast keine zusätzlichen Kosten, da das Material für den Magnetumleiter 102 sehr billig ist. Durch die Einsparung einer Spule und durch die einfacheren Polschuhe 112 wird vielmehr ein großer Teil eingespart.

Die Arme des Magnetumleiters 102 sowie beide Polschuhen 112 werden nur in eine Richtung magnetisiert, z. B. nur als Süd- oder Nordpol, und nur der Spulenkern 104 wird in einem Zyklus komplett ummagnetisiert, beispielsweise von Nord auf Süd oder umgekehrt. Dadurch entstehen im Magnetumleiter 102 und in den Polschuhen 112 geringere magnetische Verluste als im Spulenkern 104. Dieses ermöglicht die Verwendung von kostengünstigeren magnetischen Materialien für die Magnetumleiter 102 und die Polschuhe 112.

Der Generator lässt sich sehr kompakt herstellen und bietet daher eine optimale Platznutzung an.

Die Ansteuerung des Magneten 110, 112 erfolgt wie bereits bekannt auf herkömmliche Art und Weise, z. B. nicht linear oder linear.

Die Figuren 5 und 6 zeigen weitere Ansichten eines Generators gemäß Ausführungsbeispielen der vorliegenden Erfindung. Der Generator kann jeweils einen Aufbau entsprechend dem anhand von Fig. 1a beschriebenen Induktionsgenerator 100 aufweisen.

Gezeigt ist ein Metallkäfig 530, der den Dauermagneten 110 und die Polschuhe 112 umschließt. Durch den Metallkäfig 530 können der Dauermagnet 110 und die Polschuhe 112 zusammengehalten werden. Der Metallkäfig 530 weist zwei gegenüberliegende Fortsätze auf, die sich über einen der Schenkel des Magnetumleiters 102 heraus erstrecken. Die Fortsätze sind mit einem Betätiger 532 gekoppelt. Der Betätiger 532 kann als ein Federelement ausgebildet sein. Ein erster Bereich des Betätigers 532 ist in Ruhestellung beabstandet zu dem nächstliegenden Schenkel des Magnetumleiters 102 angeordnet. Ein zweiter Bereich des Betätigers 532 ist um den Verbindungsbereich des Magnetumleiters 102 herumgeführt und liegt an dem Verbindungsbereich an. Der zweite Bereich kann in eine Nut eines durch den Verbindungsbereich des Magnetumleiters 102 hindurch ragenden Endabschnitts des Spulenkerns 104 eingreifen. Ein dritter Bereich des Betätigers 532 ist entlang des weiteren Schenkels des Magnetumleiters 102 bis zu einer Öffnung in dem weiteren Schenkel geführt und in die Öffnung eingehakt.

Bei einer Betätigung des Betätigers 532 wird der erste Bereich des Betätigers 532 durch eine auf den Betätiger 532 wirkende Kraft in Richtung des benachbarten Schenkels des Magnetumleiters 102 gedrückt. Dabei wird der Metallkäfig 530 durch die Kopplung mit dem Betätiger 532 bewegt, so dass der Dauermagnet 110 mit den Polschuhen 112 von der in Fig. 1a gezeigten Position in die in Fig. 1b gezeigte Position bewegt wird. Nach der Betätigung des Betätigers 532 kann der erste Bereich des Betätigers 532 aufgrund einer Rückstellkraft, beispielsweise einer Feder, wieder in die Ausgangsposition zurückkehren. Dadurch wird der Dauermagnet 110 durch die Kopplung mit dem Betätiger 532 von der in Fig. 1b gezeigten Position in die in Fig. 1a gezeigte Position bewegt.

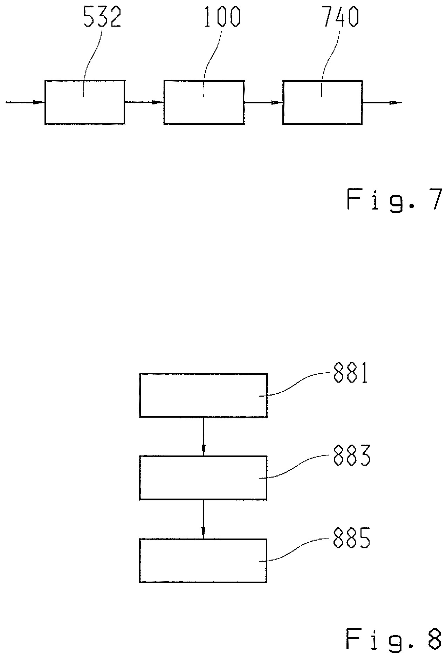

Fig. 7 zeigt eine schematische Darstellung eines Funkschalters gemäß einem Ausführungsbeispiel der vorliegenden Erfindung. Der Funkschalter weist ein Schaltelement 532, einen Induktionsgenerator 100 und eine Übertragungseinrichtung 740 auf. Bei dem Induktionsgenerator 100 kann es sich um den in den Figuren 5 und 6 gezeigten Induktionsgenerator 100 handeln. Demnach kann es sich bei dem Schaltelement 532 um den gezeigten Betätiger 532 handeln. Die Übertragungseinrichtung 740 ist ausgebildet, um eine Information über eine Betätigung des Schaltelements 532, über eine Funkschnittstelle auszusenden. Zum Betrieb der Übertragungseinrichtung 740 erforderliche Energie kann durch den Induktionsgenerator 100 erzeugt werden, indem der Induktionsgenerator durch die Betätigung des Schaltelements 532 betrieben wird.

Somit bewirkt eine auf das Schaltelement 532 einwirkende Kraft eine Bewegung des Magnetelements des Induktionsgenerators 100. Der Induktionsgenerator 100 erzeugt daraufhin elektrische Energie, die über elektrische Kontakte an die Übertragungseinrichtung 740 bereitgestellt werden kann. Die elektrische Energie wird von der Übertragungseinrichtung 740 genutzt, um die Information über die Betätigung des Schaltelements 532 auszusenden.

Fig. 8 zeigt ein Ablaufdiagramm eines Verfahrens zum Herstellen eines Induktionsgenerators der vorliegenden Erfindung. In einem Schritt 881 wird eine Induktionsspule auf einem Spulenkern befestigt. Anschließend wird in einem Schritt 883 der Spulenkern samt Spule an einem U-förmigen Magnetumleiter oder Außenkern befestigt. In einem Schritt 885 wird ein Magnetelement benachbart zu dem Spulenkern und dem Magnetumleiters beweglich angeordnet. Dabei kann das Magnetelement mit einer Betätigungseinrichtung gekoppelt werden, mit der das Magnetelement bewegt und der Induktionsgenerator 100 entsprechend betrieben werden kann.

Gemäß einem Ausführungsbeispiel wird der Spulenkern separat gefertigt, mit der Spule versehen und mit samt der Spule im Magnetumleiter befestigt. Dabei kann der Spulenkern mit der Spule in den Magnetumleiter gesteckt werden. Dabei wird nur eine Spule verwendet. Der Dauermagnet wird mit zwei einfachen und identischen Polschuhen versehen.

Die beschriebenen und in den Figuren gezeigten Ausführungsbeispiele sind nur beispielhaft gewählt. Die Abmessungen und geometrischen Formen der beschriebenen Elemente sind nur beispielhaft und können an die jeweiligen Einsatzgebiete des Induktionsgenerators angepasst werden.

Bezugszeichen

| 100 | Induktionsgenerator |
|-----|---------------------|
| 102 | Magnetumleiter |
| 104 | Spulenkern |
| 106 | Spule |
| 110 | Magnet |
| 112 | Polschuh |
| 220 | Schnittstelle |
| 304a | Bereich des Spulenkerns |
| 304b | Bereich des Spulenkerns |
| 530 | Metallkäfig |

532    Betätiger
740    Übertragungseinrichtung


**Patentansprüche**

1.  Induktionsgenerator (100) für einen Funkschalter, mit folgenden Merkmalen:

    einem U-förmigen Magnetumleiter (102) mit einem ersten Schenkel, einem benachbart zu dem ersten Schenkel angeordneten zweiten Schenkel und einem Verbindungsbereich zum Verbinden des ersten und des zweiten Schenkels;
    einem Spulenkern (104), der zwischen dem ersten und zweiten Schenkel des Magnetumleiters angeordnet ist und mit dem Verbindungsbereich des Magnetumleiters verbunden ist;
    einer Induktionsspule (106), die zwischen dem ersten und dem zweiten Schenkel des Magnetumleiters auf dem Spulenkern angeordnet ist, so dass die ersten und die zweiten Schenkel und der Spulenkern einen E-förmigen Magnetkern bilden; und
    einem beweglich angeordneten Magnetelement (110) mit einem ersten Kontaktbereich (112) und einem zweiten Kontaktbereich (112), wobei in einer ersten Position des Magnetelements der erste Kontaktbereich an den ersten Schenkel und der zweite Kontaktbereich an den Spulenkern und in einer zweiten Position des Magnetelements der erste Kontaktbereich an den Spulenkern und der zweite Kontaktbereich an den zweiten Schenkel angrenzen,
    **dadurch gekennzeichnet, dass** das Magnetelement (110) einen ersten Polschuh (112) zum Ausbilden des ersten Kontaktbereichs und einen zweiten Polschuh (112) zum Ausbilden des zweiten Kontaktbereichs aufweist wobei freie Enden des ersten und des zweiten Polschuhs jeweils mit freien Enden des Spulenkerns (104) und des ersten und zweiten Schenkels überlappen,
    und dass der Spulenkern (104) einen Trägerabschnitt zum Tragen der Induktionsspule (106) und einen Kontaktabschnitt zum Kontaktieren des ersten und des zweiten Kontaktbereichs aufweist und wobei ein Querschnitt durch den Kontaktabschnitt größer als ein Querschnitt durch den Trägerabschnitt ist,
    und dass der Induktionsgenerator eine Betätigungseinrichtung (532) zum Bewegen des Magnetelements (110) zwischen der ersten Position und der zweiten Position aufweist.

2.  Induktionsgenerator (100) gemäß einem der vorangegangenen Ansprüche, **dadurch gekennzeichnet, dass** das eine Verbindungslinie zwischen einem Südpol und einem Nordpol des Magnetelements (110) quer zu einer Längserstreckungsrichtung des Spulenkerns (104) verläuft.

3.  Induktionsgenerator (100) gemäß einem der vorangegangenen Ansprüche, **dadurch gekennzeichnet, dass** der erste und der zweite Schenkel jeweils einen Abschnitt zum Überspannen der Induktionsspule (106) und einen Kontaktabschnitt zum Kontaktieren des ersten und des zweiten Kontaktbereichs aufweisen und wobei ein Querschnitt durch die Abschnitte zum Überspannen jeweils größer als ein Querschnitt durch die Kontaktabschnitte ist.

4.  Induktionsgenerator (100) gemäß einem der vorangegangenen Ansprüche, **dadurch gekennzeichnet, dass** der Verbindungsbereich eine Öffnung zur Aufnahme eines Endabschnitts des Spulenkerns (104) aufweist.

5.  Funkschalter mit folgenden Merkmalen:

    einem Schaltelement (532);
    einem Induktionsgenerator (100) gemäß einem der vorhergehenden Ansprüche, wobei das Magnetelement (110) des Induktionsgenerators mit dem Schaltelement gekoppelt ist, um bei einer Betätigung des Schaltelements von der ersten Position in die zweite Position bewegt zu werden; und
    einer Übertragungseinrichtung (740) zur drahtlosen Übertragung einer Information über eine Betätigung des Schaltelements, wobei elektrische Anschlüsse der Übertragungseinrichtung mit elektrischen Anschlüssen der Induktionsspule (106) des Induktionsgenerators verbunden sind.


**Claims**

1.  Induction generator (100) for a radio-operated switch, having the following features:

# EP 2 666 234 B1

a U-shaped magnetic diverter (102) comprising a first limb, a second limb which is arranged adjacent to the first limb, and a connecting region for connecting the first and the second limb;

a coil core (104) which is arranged between the first and the second limb of the magnetic diverter and is connected to the connecting region of the magnetic diverter;

an induction coil (106) which is arranged between the first and the second limb of the magnetic diverter on the coil core, so that the first and the second limbs and the coil core form an E-shaped magnet core; and

a movably arranged magnet element (110) with a first contact region (112) and a second contact region (112), wherein the first contact region adjoins the first limb and the second contact region adjoins the coil core in a first position of the magnet element and the first contact region adjoins the coil core and the second contact region adjoins the second limb in a second position of the magnet element,

**characterized in that** the magnet element (110) has a first pole shoe (112) for forming the first contact region and a second pole shoe (112) for forming the second contact region, wherein free ends of the first and of the second pole shoe respectively overlap with free ends of the coil core (104) and of the first and of the second limb, and **in that** the coil core (104) has a carrier section for carrying the induction coil (106) and a contact section for making contact with the first and the second contact region, and wherein a cross section through the contact section is larger than a cross section through the carrier section,

and **in that** the induction generator has an operating device (532) for moving the magnet element (110) between the first position and the second position.

2. Induction generator (100) according to one of the preceding claims, **characterized in that** the a connecting line between a south pole and a north pole of the magnet element (110) runs transversely to a direction of longitudinal extent of the coil core (104).

3. Induction generator (100) according to one of the preceding claims, **characterized in that** the first and the second limb each have a section for spanning the induction coil (106) and a contact section for making contact with the first and the second contact region, and wherein a cross section through the spanning sections is in each case larger than a cross section through the contact sections.

4. Induction generator (100) according to one of the preceding claims, **characterized in that** the connecting region has an opening for receiving an end section of the coil core (104).

5. Radio-operated switch having the following features:

a switching element (532);

an induction generator (100) according to one of the preceding claims, wherein the magnet element (110) of the induction generator is coupled to the switching element in order to be moved from the first position to the second position when the switching element is operated; and

a transmission device (740) for wirelessly transmitting an item of information by means of operating the switching element, wherein electrical connections of the transmission device are connected to electrical connections of the induction coil (106) of the induction generator.

**Revendications**

1. Générateur d'induction (100) pour un commutateur radio, ayant les caractéristiques suivantes :

un déviateur magnétique (102) comprenant une première branche, une deuxième branche disposée voisine de la première branche et une zone de liaison destinée à relier la première et la deuxième branche ;

un noyau de bobine (104), qui est disposé entre la première et la deuxième branche du déviateur magnétique et qui est relié à la zone de liaison du déviateur magnétique ;

une bobine d'induction (106), qui est disposée entre la première et la deuxième branche du déviateur magnétique de sorte que les premières et les deuxièmes branches et le noyau de bobine forment un noyau magnétique en forme de E ; et

un élément magnétique (110) monté mobile, comprenant une première zone de contact (112) et une deuxième zone de contact (112), dans une première position de l'élément magnétique, la première zone de contact étant adjacente à la première branche et la deuxième zone de contact au noyau de bobine et, dans une deuxième position de l'élément magnétique, la première zone de contact étant adjacente au noyau de bobine et la deuxième zone de contact à la deuxième branche,

**caractérisé en ce que** l'élément magnétique (110) possède une première pièce polaire (112) destinée à former la première zone de contact et une deuxième pièce polaire (112) destinée à former la deuxième zone de contact, les extrémités libres de la première et de la deuxième pièce polaire chevauchant respectivement les extrémités du noyau de bobine (104) et de la première et de la deuxième branche,

et **en ce que** le noyau de bobine (104) possède une portion porteuse destinée à supporter la bobine d'induction (106) et une portion de contact destiné à établir le contact avec la première et la deuxième zone de contact et une coupe transversale à travers la portion de contact étant plus grande qu'une coupe transversale à travers la portion porteuse,

et **en ce que** le générateur d'induction possède un dispositif d'actionnement (532) destiné à déplacer l'élément magnétique (110) entre la première position et la deuxième position.

2. Générateur d'induction (100) selon l'une des revendications précédentes, **caractérisé en ce que** la une ligne de liaison entre un pôle sud et un pôle nord de l'élément magnétique (110) suit un tracé transversal par rapport à une direction d'extension longitudinale du noyau de bobine (104).

3. Générateur d'induction (100) selon l'une des revendications précédentes, **caractérisé en ce que** la première et la deuxième branche possèdent respectivement une portion destinée à enjamber la bobine d'induction (106) et une portion de contact destinée à établir le contact avec la première et la deuxième zone de contact et une coupe transversale à travers les portions d'enjambement étant respectivement plus grande qu'une coupe transversale à travers les portions de contact.

4. Générateur d'induction (100) selon l'une des revendications précédentes, **caractérisé en ce que** la zone de liaison possède une ouverture destinée à accueillir une portion d'extrémité du noyau de bobine (104).

5. Commutateur radio, ayant les caractéristiques suivantes :

un élément de commutation (532) ;
un générateur d'induction (100) selon l'une des revendications précédentes, l'élément magnétique (110) du générateur d'induction étant couplé à l'élément de commutation afin d'être déplacé de la première position dans la deuxième position lors d'un actionnement de l'élément de commutation ; et
un dispositif de transmission (740) destiné à la transmission sans fil d'une information sur un actionnement de l'élément de commutation, des bornes électriques du dispositif de transmission étant reliées à des bornes électriques de la bobine d'induction (106) du générateur d'induction.

Fig. 1a

Fig. 1b

Fig. 2a

Fig. 2b

Fig. 2c

110    112    102    100

112    304a    104    304b

Fig. 3

304a    104    304b

Fig. 4

Fig. 5

Fig. 6

532     100     740

Fig. 7

881

883

885

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10125059 A1
- DE 10301192 A1
- EP 0130423 A2
- WO 2004093299 A1